# EUROPEAN PATENT APPLICATION

(11) **EP 0 581 407 A1**
(43) Date of publication of application: **02.02.1994**
(21) Application number: 93302333.5
(22) Date of filing: 25.03.1993
(51) Int. Cl.: G01C 19/56

(54) **Rate sensor with ring resonator having electromagnetic drive and electrostatic pick off**

(30) Priority: 01.04.1992 GB 9207148
(71) Applicant: BRITISH AEROSPACE PUBLIC LIMITED COMPANY, Farnborough, Hants. GU14 6YU (GB)
(72) Inventor: Norris, Timothy Sweyn, British Aerospace Syst., Hertfordshire SG1 2DB (GB); McInnes, James, British Aerospace Syst., Hertfordshire SG1 2DB (GB)
(74) Representative: Rooney, Paul Blaise

(57) **Abstract**

An electromagnetic excitation device (10) is provided on a vibrating rate sensor (18) thereby enabling larger air gaps (G) to be provided between the electromagnetic drive and electrostatic pick-off transducers (30, 60, 62). The larger air gaps are possible due to the larger magnitude of vibration produced by electromagnetic as opposed to electrostatic drive and help avoid the problems of viscous damping and dirt occlusion.

## Description

The present invention relates to a rate sensor and relates particularly, but not exclusively, to rate sensor drive and pick-off configurations.

Rate sensors such as those disclosed in GB 2021266 and GB 2156523 use a combination of electrostatic drive and pick-off. Such an arrangement has the disadvantage of requiring a small gap separation to be achieved between the drive electrodes and high voltages to be employed in order to enable adequate driving forces to be created. The gap separations can be as small as a few microns whilst voltages of 400 volts are commonplace. Small gaps give problems with regard to piece-part dimensional tolerances and stability as well as requiring exclusion of contamination such as dust particles which could occlude the gap and prevent free mechanical vibration of the resonator. Additionally, if a viscous medium such as air fills the small gap between the capacitor plates where one of the capacitor plates forms part of the resonator, severe damping of the resonator can occur which can reduce the basic sensitivity of the resonating vibrating Coriolis rate sensor. Forthis reason of viscous damping, the resonators of the above mentioned rate sensor have to be operated in a vacuum environment which adds to sensor complexity and cost and- results in limited shelf life.

One of the problems associated with the above mentioned electrostatic pick-offs is that they must be placed very closely to the resonator in order to sense the comparatively small vibration amplitudes generated by the electrostatic drive transducers. The close proximity of the pick-off transducers to the resonator mean that the problems associated with the electrostatic drive transducers are also experienced with the electrostatic pick-off transducers, thus further reducing the performance capabilities of the sensor.

In addition to the above, it has been found that a considerable amount of undesirable cross talk is generated between electrostatic excitation and pick-off transducers which results in the need for elaborate screening between the transducers.

It is an object of the present invention to provide a rate sensor with a drive and pick-off configuration which reduces and possibly eliminates the above mentioned problems.

Accordingly, the present invention provides a rate sensor comprising a ring or hoop resonator having a vibrating structure for vibrating about an axis X, a vibration means for exciting vibration in-said vibrating structure and vibration detection means for detecting vibration in said vibrating structure, said vibration means comprising a magnetic excitation device for generating a magnetic force and a paramagnetic region on said vibrating structure for interacting with said excitation device so as to excite said vibration and said vibration detection means comprising one or more electrostatic pick-off transducers adjacent the vibrating structure for receiving and electrostatic signal indicative of movement of said vibrating structure.

By providing electro magnetic excitation rather than electrostatic excitation, large vibration amplitudes may be achieved and larger airgaps may be employed between the drive transducers and the resonator. The larger vibration amplitudes can be sensed by capacitive pick-off transducers employing larger air gap separations than those previously employed, thus further reducing the problems associated with viscous damping and contamination. Moreover, the capacitive pick-up is relatively insensitive to impinging alternating magnetic fields, operation of the sensor is thus possible at an air pressure of 780mmHg (1 bar) because the large gaps result in an acceptably low level of viscous damping of the resonator vibration ie, the mechanical Q-factor of resonance for the resonator is not unacceptably low. Another feature of this arrangement is that a considerable reduction in direct cross talk between the excitation and pick-off transducers is achieved.

Preferably, the sensor includes an electrostatic pick-off transducer positioned radially outward of said vibrating structure for detecting rotation of said structure about said axis X.

Advantageously, the sensor includes a pair of electrostatic pick-off transducers, a first upper of which is positioned adjacent a first side of said vibrating structure and a second lower of which is positioned adjacent a second side of said vibrating structure for detecting movement of said vibrating structure in the direction of said axis X and/or perpendicular relative thereto.

The sensor may include one or more charge amplifiers for buffering pick-off signals from the one or more electrostatic pick-offs.

Advantageously, the sensor includes summing means for summing electrostatic signals from said upper and lower electrostatic pick-off transducers thereby to enable multiaxis motion sensing to be achieved.

Preferably, the sensor includes primary and secondary pick-off transducers, said primary pick-off transducers being provided for driving the vibration means so as to sustain the vibration of the vibrating structure and the secondary pick-off transducers being provided for detecting secondary mode vibrations corresponding to movement of said vibrating structure.

Conveniently, the sensor includes an oscillator for driving the vibration means.

The vibration means may comprise two drive transducers positioned on opposite sides of the vibrating structure to each other.

Advantageously, the sensor includes a source of electrical potential connected for passing electrical current through said vibrating structure.

The oscillator may include a phase locked control loop and analogue filter. In addition to this, the oscillator may include gain control components to maintain the primary buffered pick-off signal to constant amplitude.

A synchronous demodulator may be provided for receiving signals from said secondary pick-off transducers and producing a signal from which a signal corresponding to sensor turning rate may be derived.

Advantageously, the sensor includes a mixing matrix for performing analogue summing and differencing of pick-off signals so as to simultaneously determine rate sensor acceleration and rotation rates.

The present invention will now be more particularly described by way of example only with reference to the accompanying drawings in which:
Figure 1 is a diagrammatic representation of a vibration excitation transducer with a non polarised magnet according to one aspect of the present invention,
Figure 2 is a diagrammatic representation of a vibration exciting transducer with permanent magnet polarisation,
Figures 3 and 4 illustrate various pick-off transducer positions on a rate sensor according to the present invention, and
Figures 5 to 7 are schematic representations of single axis rate sensors incorporating various features of the present invention.

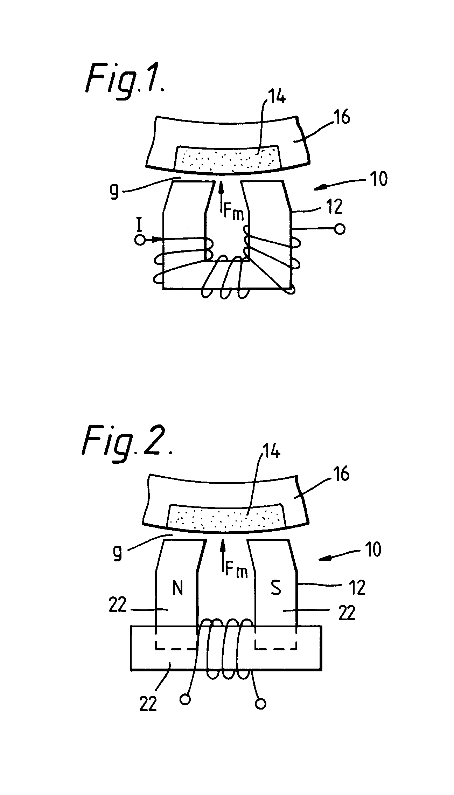

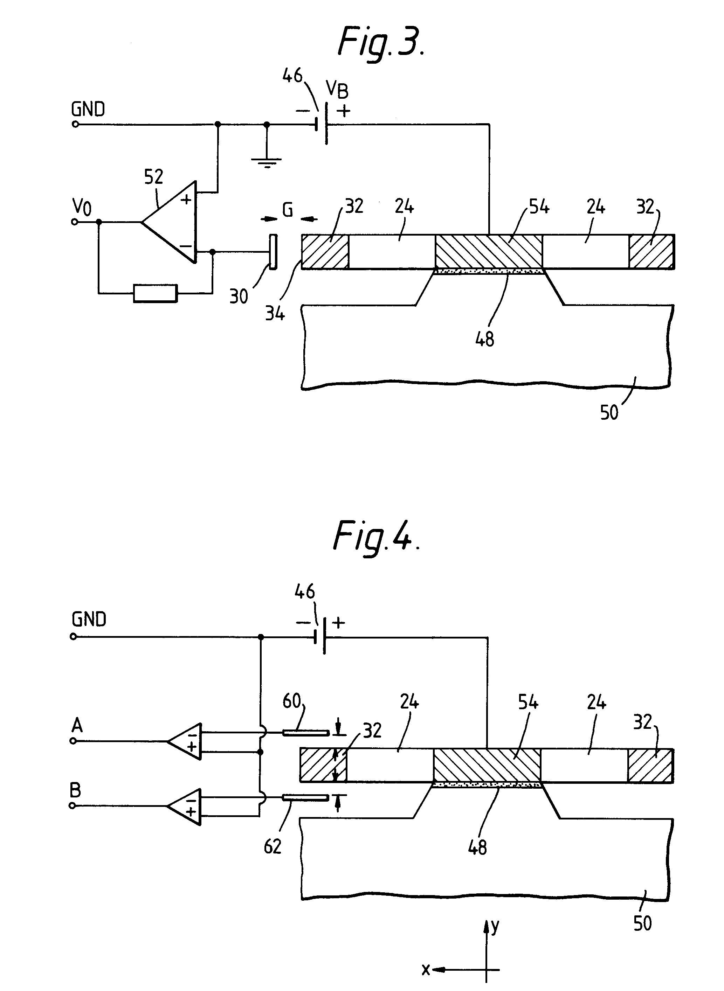

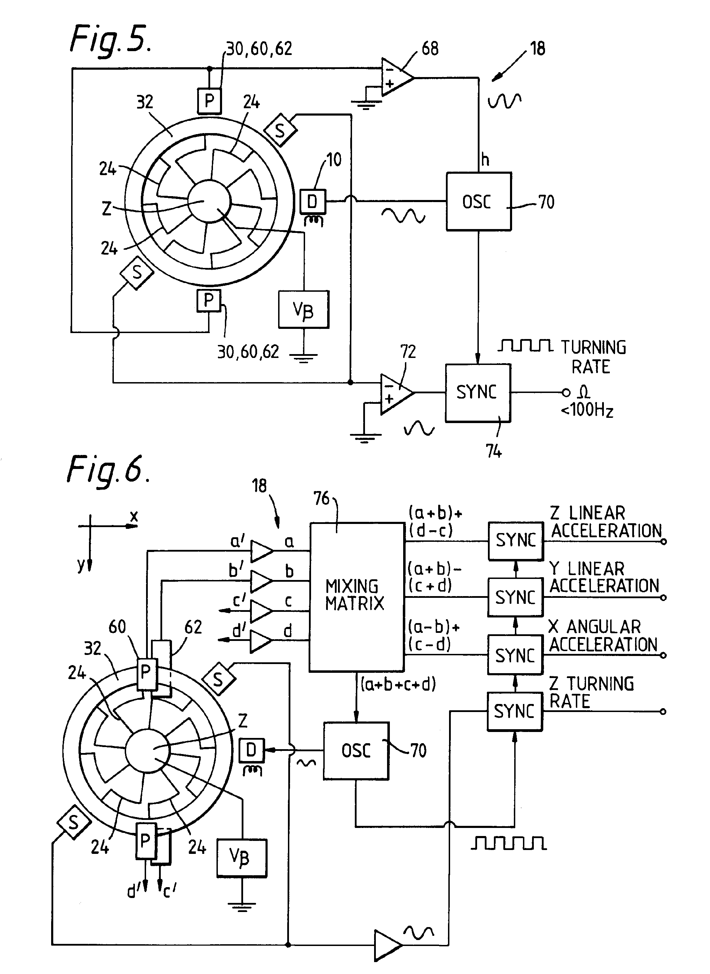

Referring now briefly to Figures 1 and 2, the vibration means shown generally at 10 comprises a magnetic excitation device 12 for generating a magnetic force (Fₘ) and a paramagnetic region 14 provided on the vibrating structure 16 of the rate sensor shown generally at 18 and best seen in Figures 5 to 7. The magnetic excitation device 12 may comprise one core as shown in Figure 1 or may comprise one or more core parts 22, one or more of which may be magnetically polarised, ie permanent magnets as shown in Figure 2. A current supply means (not shown) is provided for providing a d.c. component and an a.c. component where polarised cores are used, or simply an a.c. component for non-polarised cores where frequency doubling can be tolerated since Fₘ is developed irrespective of the direction of current I in this situation.

If the reluctance of the gap width X largely defines the reluctance of the magnetic circuit, the magnetic force Fₘ is
Fₘ ⁼ µ(Hₒ + (nl/2x))²A Eq.1
where Hₒ is the magneto motive force associated with the core magnetic polarisation, n is the number of turns of wire 20 around the core 12, A is approximately the area of the core end 22 facing the paramagnetic portion 14 illustrated in Figure 3 as a plate, and µ is the permeability of the medium present in the gap region g. The advantage of this magnetic excitation method is that the force is only determined by coil current I and polarisation magneto motive force Hₒ; geometric parameters such as A and x tend to be stable, and µ is constant provided that no magnetic sat
uration occurs.

The above mentioned arrangement has the additional advantage of permitting appreciable force to be achieved for gap separations of typically 0.5 mm and avoids the need to generate high voltages. Moreover, the problem of dust contamination in narrow gaps is avoided and the effect of air damping can be reduced so that adequate sensitivity can be achieved without the need to operate the resonators within a vacuum enclosure.

It may be derived that ^{F}m ^{/} Fₑ ⁼ (µ/ε v2) (2x² Hₒ^{2 +} n² 12/2 + 2 Hₒ n I x) Eq.2

It can be seen that as x is increased in equation 1, the magnetic force Fₘ becomes more significant than the electrostatic force Fₑ; moreover, Fₘ can be increased by using many turns (large n) and strongly magnetically polarised cores (large Hₒ). The magnetic excitation approach also avoids the risk of electrical discharge that exists in the case of electrostatic excitation, particularly if high voltages are employed.

In order to magnetically excite the form of vibrating rate sensor 18 described in GB 9105060.9, it is desirable that the resonator bulk material is strongly paramagnetic or that strongly paramagnetic targets 14 of materials such as nickel, iron or rare earth elements are bonded or deposited at appropriate positions on the vibrating portion of the rate sensor as illustrated in Figures 5 to 10. Alternatively, a non-paramagnetic vibrating portion 18 could be uniformly coated or plated with a complete layer of paramagnetic material 14 such as nickel in order to make it usable for magnetic excitation. If targets of paramagnetic material 14 are used, the number will depend upon the rate sensor configuration and their location will either be on the vibrating portion 16 or on support beams 24 associated therewith. For a vibrating rate sensor employing magnetic excitation, the vibrating portion must be fabricated from a material with a relatively high (> 400) mechanical Q-factor such as steel, nickel, hardened beryllium copper, glass or silicon. If a metal is chosen for the vibrating portion, this may be manufactured by etching or punching from a metal sheet. Etching processes are preferred because greater tolerance control may be achieved and additional stresses are not introduced into the fabricated part. If etching is used as a method of fabrication of metal vibrating portions, it is necessary to coat the metal sheet in a photosensitive resin film into which the vibrating portions features are exposed using a suitable mask; the resist- coated sheet is then etched in a chemical bath containing acid, ferric chloride or similar to leave the formed component remaining at the completion of the etching process. The component is then rinsed and residual resist removed. An alternative method to etching the component from sheet is to employ direct laser cutting (by ablation or laser-assisted plasma machining).

It is also feasible to use silicon or glass for the vibrating portion as described above. Etching of these materials may be achieved using processes based on hydrofluoric acid or potassium hydroxide. More exotic processes such as gaseous plasma etching or laser machining may be employed to form the resonator from glass or silicon. However, these processes tend to be more expensive than simple wet chemical etching.

The comparatively large vibration amplitudes generated by the electromagnetic drive transducers enables capacitive pick-off transducers employing large air gaps to be employed as shown in Figures 3 and 4. In Figure 3, the rotation rate pick-offtransducer 30 is positioned adjacent the vibrating structure 32 of the sensor 18 but separated therefrom by a comparatively large gap G, which may be as much as 300 f..lm. A potential difference Vp is required between the pick-off transducer 30 and the edge 34 of the vibrating structure that faces it. A bias generator 46 is provided for providing a positive (or negative) potential between the transducer 30 and the electrically conductive vibrating structure 32. An insulation layer 48 may be provided between structure 32 and a support base 50.

The operation of capacitive pick-off transducers is well known in the art and is therefore not described in detail herein. However, in brief, rotation of the vibrating portion 32 produces a capacitive effect which is detected by transducer 30. The magnitude of this effect is indicative of rotation rate and hence the output from transducer 30 may be used to determine sensor rotation rate.

The sensor may include a charge amplifier 52 to buffer any output from transducer 30. In order to avoid disturbing the vibrating structure, the bias potential Vp may be applied at the centre mounting region 54 of the vibrating portion.

A suspended ring or hoop-like resonator may be used as a multiaxis inertial sensor. In order to achieve this sensing function, it is necessary to arrange the electrostatic pick-off transducers as shown in Figure 4. In Figure 4, the pick-off transducers 60, 62 are located above and below the vibrating structure 32. If the transducers 60, 62 are identical in size and distance from the vibrating structure 32 summing signals Aand B allows detection of structure movement in the X axis whereas differencing signals A and B allows Y direction motion to be sensed.

Referring now to Figures 5 to 7 in general but particularly to Figure 5 which illustrates the simplest configuration for an open-loop single-axis turning rate sensor in which the use of the "Cos28" in plane vibration mode is assumed although related higher-order vibration modes may theoretically be used. The pick-off transducers 30, 60, 62 are arranged at 45 degree points around the vibrating structure 32 and the primary pick-offs 30 are perpendicular to the vibration means 10. Detected primary mode oscillation at pick-offs 30 is amplified by buffer amplifiers 68 and injected into an oscillator 70 which drives the excitation exciting vibration means in order to sustain the vibration of structure 32. The oscillator 70 may contain components such as phase-locked-loops although a simple analogue filter is preferred for the simplest implementations, particularly since the vibrating structure combined with this transducer arrangement tends to exhibit one dominant resonance in the "Cos28" mode. The oscillator 70 may also contain a gain-control- component to maintain the primary-mode buffered pick-off signal to constant amplitude.

When the vibrating structure shown schematically in Figure 5 is turned about its Z axis, Coriolis forces couple the primary mode vibrations into the secondary axis to which the secondary transducers 30, 60, 62 are aligned. The detected secondary mode vibrations are amplified by amplifier 72 and then passed to a synchronous demodulator 74 from which signals corresponding to sensor turning rate may be derived. Two vibration means 10 may be positioned at opposite sides to each other in order to excite vibration in the vibrating structure although in practice, one has been found to be adequate and provides a cheaper and more compact assembly.

For multiaxis inertial sensing, a number of pick-off transducer configurations are possible, such as are described in GB 9105060.9. For magnetically excited devices such as the one described herein, an open-loop sensor providing two axes of linear acceleration sensing (YZ) are axis of turning rate sensing (Z) and one axis of angular acceleration sensing (X) is possible when configured as shown in Figure 6. A mixing matrix 76 performs analogue summing and differencing of the pick-off signals to isolate particular movements of the sensor such as:- Z LINEAR ACCELERATION, Y LINEAR ACCELERATION, X ANGULAR ACCELERATION AND Z TURNING RATE.

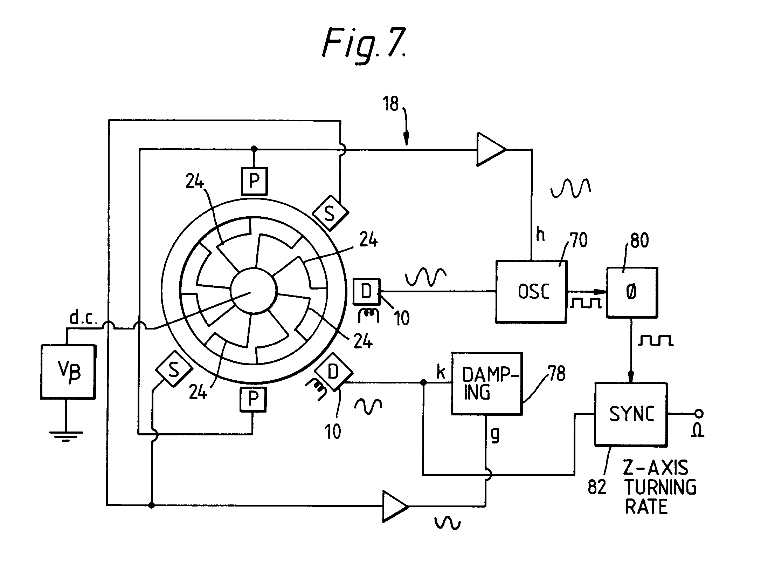

A closed loop single axis turning-rate sensor may be implemented by employing two driving vibration means 10 as shown in Figure 7. The vibration means 10 excites the "Cos 20) (or higher modes if specifically selected) vibration mode along the primary axis and damping the corresponding mode along the secondary axis. A damping unit 78 is incorporated to shift the phase of the secondary pick-off signal g to provide a drive signal "k" that will null any Cos 20 mode vibrations (or high modes) coupled by turning rate into the secondary axis. Primary pick-off signal "h" is shifted in phase by an angle 0 in a phase matching unit 80 before being used as a gating signal forthe demodulator unit 82 from which the turning rate output signal is obtained. This closed-loop configuration offers the advantage of increased detected turning rate measurement bandwidth. The phase-shifting unit 80 ensures that the synchronous demodulator 82 can discriminate the desired turning rate signal.

A multi axis inertial sensor offering closed loop turning-rate detection may be obtained by combining the circuit schemes shown in Figures 6 and 7 where the acceleration signals are sensed open-loop and the turning rate is sensed closed-loop.

## Claims

1. A rate sensor (18) comprising a ring or hoop resonator having a vibrating structure (32) for vibrating about an axis X, a vibration means (12) for exciting vibration in said vibrating structure (32) and vibration detection means (30, 60, 62) for detecting vibration in said vibrating structure (16), characterised in that said vibration means (12) comprises a magnetic excitation device (12) for generating a magnetic force and a paramagnetic region (14) on said vibrating structure (32) for interacting with said excitation device (12) so as to excite said vibration and said vibration detection means (30, 60, 62) comprising one or more electrostatic pick-off transducers adjacent the vibrating structure (32) for receiving and electrostatic signal indicative of movement of said vibrating structure (16).

2. A rate sensor (18) as claimed in claim 1 including an electrostatic pick-off transducer (30) positioned radially outward of said vibrating structure (32) for detecting rotation of said structure about said axis X.

3. A rate sensor (18) as claimed in claim 2 or claim 1 including a pair of electrostatic pick-off transducers (60, 62), a first (60) upper of which is positioned adjacent a first side of said vibrating structure and a second (62) lower of which is positioned adjacent a second side of said vibrating structure for detecting movement of said vibrating structure in the direction of said axis X and/or perpendicular relative thereto.

4. A rate sensor as claimed in any one of claims 1 to 3 including one or more charge amplifiers (52) for buffering pick-off signals from said one or more electrostatic pick-offs (30, 60, 62).

5. A rate sensor as claimed in claim 3 or claim 4 including summing means (76) for summing electrostatic signals from said upper and lower electrostatic pick-off transducers (60, 62).

6. A rate sensor as claimed in claim 3 or claim 4 including differencing means (76) for differencing electrostatic signals from said upper and lower electrostatic pick-off transducers (60, 62).

7. A rate sensor (18) as claimed in any one of claims 1 to 6 including primary and secondary pick-off transducers, said primary pick-off transducers being provided for driving the vibration means (12) so as to sustain the vibration of the vibrating structure (32) and the secondary pick-off transducers being provided for detecting secondary mode vibrations corresponding to movement of said vibrating structure (32).

8. A rate sensor as claimed in any one of claims 1 to 7 including oscillator means (70) for driving the vibration means (12).

9. A rate sensor as claimed in any one of claims 1 to 8 in which the vibration means (12) comprises two drive transducers (12) positioned on opposite sides of the vibrating structure (32) to each other.

10. A rate sensor (18) as claimed in any one of claims 1 to 9 including a source of electrical potential connected for gassing electrical current through said vibrating structure (32).

11. A rate sensor (18) as claimed in claim 8 in which said oscillator (70) includes a phase locked control loop.

12. A rate sensor (18) as claimed in claim 8 in which said oscillator (70) includes an analogue filter.

13. A rate sensor (18) as claimed in any one of claims 8, 11 or 12 in which the oscillator (70) includes gain-control components to maintain the primary buffered pick-off signal to constant amplitude.

14. A rate sensor (18) as claimed in any one of claims 7 to 13 including a synchronous demodulator (74) for receiving signals from said secondary pick-off transducers (30, 60, 62) and producing a signal from which a signal corresponding to sensor turning rate may be derived.

15. A rate sensor (18) as claimed in any one of claims 1 to 14 including a mixing matrix (76) for performing analogue summing and differencing of pick-off signals so as to simultaneously determining rate sensor acceleration and rotation rates.
